# EUROPÄISCHE PATENTSCHRIFT

(11) **EP 3 983 274 B1**
(45) Veröffentlichungstag und Bekanntmachung des Hinweises auf die Patenterteilung: **14.08.2024**
(21) Anmeldenummer: 20733208.1
(22) Anmeldetag: 04.06.2020
(51) Int. Cl.: B60W 50/023, B60R 16/033, B60W 10/184, B60W 10/20

(54) **EINRICHTUNG UND VERFAHREN ZUM AUSFÜHREN ZUMINDEST EINER FAHRZEUGFUNKTION FÜR EIN FAHRZEUG**
DEVICE AND METHOD FOR CARRYING OUT AT LEAST ONE VEHICLE FUNCTION FOR A VEHICLE
DISPOSITIF ET PROCÉDÉ POUR LA MISE EN OEUVRE D'AU MOINS UNE FONCTION DE VÉHICULE POUR UN VÉHICULE

(30) Priorität: 17.06.2019 DE 102019116375
(43) Veröffentlichungstag der Anmeldung: 20.04.2022
(73) Patentinhaber: KNORR-BREMSE Systeme für Nutzfahrzeuge GmbH, 80809 München (DE)
(72) Erfinder: RAMMERT, Alexander, 70806 Kornwestheim (DE); KAUFMANN, Christian, 71063 Sindelfingen (DE); BEYSE, Thorsten, 73265 Dettingen (DE); POHLMANN, Maximilian, 76646 Bruchsal (DE); GSCHEIDLE, Wolfgang, 71720 Oberstenfeld (DE); HOOS, Felix, 71696 Möglingen (DE); STANKOVIC, Dordo, 71679 Asperg (DE); ROTH, Matthias, 71665 Vaihingen an der Enz (DE)
(86) Internationale Anmeldenummer: PCT/EP2020/065467
(87) Internationale Veröffentlichungsnummer: WO 2020/254120

(56) Entgegenhaltungen:
- EP-A2- 2 587 330
- DE-A1- 102007 050 730
- DE-A1- 102012 021 564
- DE-A1- 102015 214 521

## Beschreibung

Der vorliegende Ansatz bezieht sich auf eine Einrichtung und ein Verfahren zum Ausführen zumindest einer Fahrzeugfunktion für ein Fahrzeug.

Während ein Automobil in seinen frühen Anfängen lediglich die grundlegenden Funktionen Gasgeben, Lenkung sowie Bremse bereitstellte und dem Fahrer die volle Aufmerksamkeit abverlangte, haben sich die Anforderungen in den letzten Jahrzehnten stetig weiterentwickelt. Getrieben durch das wachsende Bedürfnis an Komfort und Sicherheit, haben Funktionen wie ein Spurhalte-, Spurwechsel- oder Notbremsassistent Einzug in das moderne Kraftfahrzeug erhalten. Mittelfristig kann der Fahrer dadurch entlastet werden, wenngleich er nach wie vor die Verantwortung für die Führung des Fahrzeugs behält und deshalb in einem Fehlerfall einzugreifen und die Kontrolle des Fahrzeugs zu übernehmen hat. Er bildet damit die Rückfallebene für das elektronische System. Vor diesem Hintergrund sollten im Hinblick auf hochautomatisierte Fahrzeuge ausgewählte Funktionen des Fahrzeugs selbst im Fehlerfall durch die Elektronik zumindest kurzzeitig garantiert werden, ohne dass Personenschäden zu erwarten sind. Somit bildet das System fortan die Rückfallebene und nicht mehr der Fahrer. Daraus ergeben sich erhöhte Anforderungen an die Entwicklung solcher als "fehlertolerant" bezeichneten Systeme.

Die Druckschrift DE 10 2015 214 521 A1 offenbart ein Aktuatorsystem für selbstfahrende Fahrzeuge.

Die Druckschrift DE 10 2012 021 564 A1 offenbart eine Vorrichtung und ein Verfahren zum teil-, hoch- oder vollautomatischen Führen eines Kraftfahrzeuges.

Die Druckschrift DE 10 2001 050 130 A1 offenbart eine elektromechanische Lenkung und Verfahren zum Betreiben einer elektromechanischen Lenkung.

Vor diesem Hintergrund ist es die Aufgabe des vorliegenden Ansatzes, eine verbesserte Einrichtung zum Ausführen zumindest einer Fahrzeugfunktion für ein Fahrzeug und ein verbessertes Verfahren zum Ausführen zumindest einer Fahrzeugfunktion für ein Fahrzeug zu schaffen.

Diese Aufgabe wird durch eine Steuereinrichtung mit den Merkmalen des Einrichtungsanspruchs 1, durch ein Verfahren nach Anspruch 8 und durch ein Computerprogramm nach Anspruch 9 gelöst.

Die mit dem vorgestellten Ansatz erreichbaren Vorteile bestehen darin, dass sowohl Materialkosten als auch Fertigungskosten gespart werden können, da weniger Bauteile und somit weniger Platz im Fahrzeug benötigt wird. Folglich kann beispielsweise das Gewicht des Fahrzeugs reduziert und gleichzeitig die Sicherheit von Verkehrsteilnehmern wie Fahrzeuginsassen, Fußgängern, Radfahrernoder Insassen anderer Fahrzeuge gewährleistet werden.

Vor diesem Hintergrund wird eine Einrichtung zum Ausführen zumindest einer Fahrzeugfunktion für ein Fahrzeug vorgestellt. Die Einrichtung weist dabei ein erstes Steuergerät mit einer ersten Haupteinheit und einer ersten Redundanzeinheit auf. Das erste Steuergerät ist ausgebildet, um eine erste Fahrzeugfunktion anzusteuern. Weiterhin weist die Einrichtung ein zweites Steuergerät mit einer zweiten Haupteinheit und einer zweiten Redundanzeinheit auf. Das zweite Steuergerät ist ausgebildet, um eine zweite Fahrzeugfunktion anzusteuern. Ferner weist die Einrichtung außerdem ein erstes Bordnetz auf, das ausgeformt ist, um die erste Haupteinheit mit der zweiten Redundanzeinheit zu verbinden. Ein von dem ersten Bordnetz getrenntes zweites Bordnetz ist ausgeformt, um die zweite Haupteinheit mit der ersten Redundanzeinheit zu verbinden. Dabei ist die zweite Haupteinheit ausgebildet, um die erste Redundanzeinheit anzusteuern, wenn das erste Bordnetz ausfällt und zusätzlich ist die erste Haupteinheit ausgebildet, um die zweite Redundanzeinheit anzusteuern, wenn das zweite Bordnetz ausfällt.

Die Einrichtung kann beispielsweise in einem Fahrzeug angeordnet sein, das ausgeformt ist, um Personen und zusätzlich oder alternativ Gegenstände zu transportieren. Die Einrichtung ist ausgebildet, um eine Fahrzeugfunktion, wie beispielsweise sicherheitsrelevante Funktionen, aber auch Komfortfunktionen des Fahrzeugs auszuführen. Eine sicherheitsrelevante Funktion kann beispielsweise eine einen Personenschutz erhöhende Funktion wie beispielsweise eine Airbagfunktion oder eine Notbremsassistent-Funktion sein. Eine Komfortfunktion kann beispielsweise eine den Komfort eines Insassen erhöhende Funktion wie beispielsweise eine Sitzheizfunktion sein. Das erste Steuergerät weist die erste Haupteinheit und die erste Redundanzeinheit auf und ist ausgebildet, um die erste Fahrzeugfunktion anzusteuern. Die erste Haupteinheit und die erste Redundanzeinheit sind dabei beispielsweise in das erste Steuergerät integriert. Die erste Redundanzeinheit ist ausgebildet, um im Falle eines Ausfalls der ersten Haupteinheit deren Aufgabe zu übernehmen und dem entsprechend die erste Fahrzeugfunktion aufrecht zu erhalten. Das zweite Steuergerät weist die zweite Haupteinheit und die zweite Redundanzeinheit auf und ist ausgebildet, um die zweite Fahrzeugfunktion anzusteuern. Die zweite Haupteinheit und die zweite Redundanzeinheit sind beispielsweise in das zweite Steuergerät integriert.

Vorteilhafterweise kann auf diese Weise ein Platzbedarf der Einrichtung in dem Fahrzeug reduziert werden. Die zweite Redundanzeinheit ist dem entsprechend ausgebildet, um im Falle eines Ausfalls als "Backup" der zweiten Haupteinheit deren Aufgabe zu übernehmen, um die zweite Fahrzeugfunktion aufrecht zu erhalten. Das erste Bordnetz und das zweite Bordnetz können voneinander unabhängig sein, sodass bei einem Ausfall des ersten Bordnetzes das zweite Bordnetz und bei einem Ausfall des zweiten Bordnetzes das erste Bordnetz vorteilhafterweise die Fahrzeugfunktionen weiterhin ausführen kann. Beispielsweise kann auch bei einem Fehler im ersten Hauptteil (der keinen Einfluss auf das erste Bordnetz hat) das System die Funktion durch den Redundanzteil weiterhin aufrechterhalten. Somit ist das in dieser Form beschriebene System selbst dann vorteilhaft, wenn die Bordnetze nicht unabhängig sind.

Gemäß einer Ausführungsform können die erste Haupteinheit und die erste Redundanzeinheit und zusätzlich oder alternativ die zweite Haupteinheit und die zweite Redundanzeinheit galvanisch voneinander getrennt sein. Vorteilhafterweise kann dadurch eine Interferenz zwischen der ersten Haupteinheit und der ersten Redundanzeinheit des ersten Steuergeräts und zusätzlich oder alternativ zwischen der zweiten Haupteinheit und der zweiten Redundanzeinheit des zweiten Steuergeräts vermieden werden.

Gemäß einer Ausführungsform kann das erste Bordnetz eine erste Energiequelle aufweisen und das zweite Bordnetz eine zweite Energiequelle aufweisen. Dabei kann die erste Energiequelle und zusätzlich oder alternativ ein erster Aktor zur Ausführung der ersten Fahrzeugfunktion innerhalb eines ersten maximalen Abstands der ersten Haupteinheit und der ersten Redundanzeinheit angeordnet sein. Weiterhin kann die zweite Energiequelle und zusätzlich oder alternativ ein zweiter Aktor zur Ausführung der zweiten Fahrzeugfunktion innerhalb eines zweiten maximalen Abstands der zweiten Haupteinheit und der zweiten Redundanzeinheit angeordnet sein. Die Energiequellen können beispielsweise als Batterien realisiert sein, die ausgebildet sein können, um die erste Energiequelle, bzw. die zweite Energiequelle mit Strom zu versorgen, sodass vorteilhafterweise die erste Fahrzeugfunktion, bzw. die zweite Fahrzeugfunktion ausgeführt werden kann. Der erste Aktor kann beispielsweise als ein Lenkaktor und/oder Aktor für Querführung ausgeformt sein, der ausgeformt ist, damit eine Spurführung des Fahrzeugs zu beeinflussen. Der zweite Aktor kann beispielsweise als Aktor für Längsführung und/oder als ein Bremsansteuersystem realisiert sein, sodass das Fahrzeug vorteilhafterweise eine Geschwindigkeit des Fahrzeugs ändern, speziell verringern kann. Zukünftig könnte auch die Funktionalität "Bremsen" im Bereich des Antriebsstrangs (E-Motor) implementiert sein. Der maximale Abstand der ersten und zusätzlich oder alternativ der zweiten Energiequelle zu den jeweiligen Aktoren, bzw. zu den Steuergeräten kann beispielsweise einen Meter betragen. Vorteilhafterweise können durch den maximalen Abstand Spannungsabfälle beispielsweise innerhalb der Verbindung reduziert werden.

Das erste Bordnetz kann ausgebildet sein, um die erste Haupteinheit und die zweite Redundanzeinheit mit Energie zu speisen. Das zweite Bordnetz kann dem entsprechend ausgebildet sein, um die zweite Haupteinheit und die erste Redundanzeinheit mit Energie zu speisen. Vorteilhafterweise kann im Falle einer Störung oder eines Ausfalls das jeweils andere Bordnetz die Energieversorgung aufrechterhalten, sodass weiterhin sowohl die erste Fahrzeugfunktion als auch die zweite Fahrzeugfunktion aufrechterhalten werden können.

Gemäß einer Ausführungsform kann weiterhin das erste Steuergerät und zusätzlich oder alternativ das zweite Steuergerät ausgebildet sein, um zumindest eine Komfortfunktion des Fahrzeugs zu deaktivieren, wenn die erste Fahrzeugfunktion und zusätzlich oder alternativ die zweite Fahrzeugfunktion ausfällt. Vorteilhafterweise kann dadurch eine Sicherheit von Fahrzeuginsassen weiterhin gewährleistet werden, da beispielsweise höher priorisierte sicherheitsrelevante Funktionen des Fahrzeugs weiterhin aktiv bleiben können.

Weiterhin kann das erste Steuergerät und zusätzlich oder alternativ das zweite Steuergerät ausgebildet sein, um eine von der ersten Fahrzeugfunktion unabhängige zweite Fahrzeugfunktion anzusteuern. Vorteilhafterweise kann dadurch eine Sicherheit von Fahrzeuginsassen sichergestellt werden.

Gemäß einer Ausführungsform kann das erste Steuergerät ausgebildet sein, um als erste Fahrzeugfunktion eine Bewegungsfunktion, insbesondere eine Lenkaktion des Fahrzeugs anzusteuern. Zusätzlich oder alternativ kann das zweite Steuergerät ausgebildet sein, um als zweite Fahrzeugfunktion eine geschwindigkeits- und/oder richtungsändernde Aktion, insbesondere eine Bremsaktion und/oder Lenkaktion des Fahrzeugs, beispielsweise durch selektives Bremsen eines Rads, anzusteuern. Vorteilhafterweise ist die erste Fahrzeugfunktion und zusätzlich oder alternativ die zweite Fahrzeugfunktion eine sicherheitsrelevante Funktion des Fahrzeugs.

Ferner wird ein Verfahren zum Ausführen zumindest einer Fahrzeugfunktion für ein Fahrzeug unter Verwendung einer Einrichtung in einer der zuvor vorgestellten Varianten vorgestellt. Das Verfahren umfasst dabei einen Schritt des Erkennens und einen Schritt des Ansteuerns. Im Schritt des Erkennens wird ein Ausfallen und/oder Defekt des ersten Bordnetzes, oder des zweiten Bordnetzes, der ersten und/oder zweiten Haupteinheit, der ersten und/oder zweiten Redundanzeinheit erkannt. Im Schritt des Ansteuerns wird die zweite Haupteinheit und die erste Redundanzeinheit angesteuert, wenn das erste Bordnetz ausgefallen ist und wird im Schritt des Ansteuerns die erste Haupteinheit und die zweite Redundanzeinheit angesteuert, wenn das zweite Bordnetz ausgefallen ist, um die erste Fahrzeugfunktion und zusätzlich oder alternativ die zweite Fahrzeugfunktion auszuführen.

Das Verfahren ist in einem Fahrzeug durchführbar, das beispielsweise ausgeformt ist, um Personen und zusätzlich oder alternativ Gegenstände zu transportieren. Die Fahrzeugfunktion kann beispielsweise eine sicherheitsrelevante Funktion des Fahrzeugs sein. Fällt beispielsweise das erste Bordnetz aus, so kann die zweite Haupteinheit und die erste Redundanzeinheit angesteuert werden. Umgekehrt kann die erste Haupteinheit und die zweite Redundanzeinheit angesteuert werden, wenn das zweite Bordnetz ausfällt. Vorteilhafterweise können auf diese Weise dennoch die erste Fahrzeugfunktion und zusätzlich oder alternativ die zweite Fahrzeugfunktion ausgeführt werden.

Dieses Verfahren kann beispielsweise in Software oder Hardware oder in einer Mischform aus Software und Hardware beispielsweise in einem Steuergerät implementiert sein.

Ein Steuergerät kann zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer nicht beanspruchten Ausgestaltung erfolgt durch das Steuergerät eine Steuerung eines Verfahrens zum Ausführen zumindest einer Fahrzeugfunktion für ein Fahrzeug. Hierzu kann das Steuergerät beispielsweise auf Sensorsignale wie ein Einlesesignal, das einen Ausfall eines Bordnetzes repräsentiert, und ein Ausgabesignal, das ein Ansteuern der ersten Haupteinheit und der zweiten Redundanzeinheit, bzw. ein Ansteuern der zweiten Haupteinheit und der ersten Redundanzeinheit repräsentiert, zugreifen. Die Ansteuerung erfolgt über Aktoren wie den Lenkaktuator oder den Bremsaktuator, die ausgebildet sind, um beispielsweise die sicherheitsrelevante Fahrfunktion oder die Komforfunktion anzusteuern.

Ausführungsbeispiele des hier vorgestellten Ansatzes werden in der nachfolgenden Beschreibung mit Bezug zu den Figuren näher erläutert. Es zeigen:
Fig. 1 eine schematische Darstellung einer Einrichtung zum Ausführen zumindest einer Fahrzeugfunktion für ein Fahrzeug gemäß einem Ausführungsbeispiel;
Fig. 2 eine schematische Darstellung einer Einrichtung nach Ausfallen eines ersten Bordnetzes und zusätzlich oder alternativ des ersten Steuergeräts eines Fahrzeugs gemäß einem Ausführungsbeispiel;
Fig. 3 ein Ablaufdiagramm eines Verfahrens zum Ausführen zumindest einer Fahrzeugfunktion für ein Fahrzeug gemäß einem Ausführungsbeispiel; und
Fig. 4 ein Blockschaltbild eines Steuergeräts zum Ansteuern eines Verfahrens zum Ausführen zumindest einer Fahrzeugfunktion für ein Fahrzeug gemäß einem nicht beanspruchten Beispiel.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

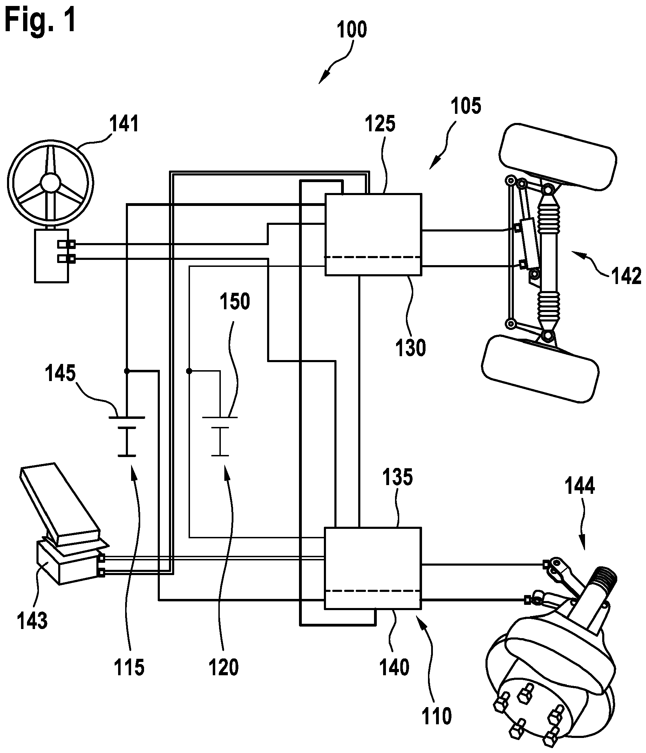

**Fig. 1** zeigt eine schematische Darstellung einer Einrichtung 100 zum Ausführen zumindest einer Fahrzeugfunktion für ein Fahrzeug gemäß einem Ausführungsbeispiel. Die Einrichtung 100 weist gemäß diesem Ausführungsbeispiel neben einem ersten Steuergerät 105 und einem zweiten Steuergerät 110, die jeweils ausgebildet sind, um Fahrzeugfunktionen anzusteuern, ein erstes Bordnetz 115 und ein zweites Bordnetz 120 auf. Das erste Steuergerät 105 weist wiederum eine erste Haupteinheit 125 und eine erste Redundanzeinheit 130 auf, die ausgebildet sind, um eine erste Fahrzeugfunktion anzusteuern. Analog dazu weist das zweite Steuergerät 110 eine zweite Haupteinheit 135 und eine zweite Redundanzeinheit 140 auf, die ausgebildet sind, um eine zweite Fahrzeugfunktion anzusteuern. Gemäß diesem Ausführungsbeispiel ist die erste Fahrzeugfunktion eine Lenkfunktion des Fahrzeugs, die beispielsweise von einem Fahrer mittels eines Lenkrads 141 initiiert wird, sodass das erste Steuergerät 105 beispielsweise einen Lenkaktor wie beispielsweise ein Servomotor als Aktor zur Verstellung der Fahrspur einer Radachse 142 ansteuert. Die zweite Fahrzeugfunktion kann beispielsweise eine Bremsfunktion sein, die der Fahrer über Betätigen eines Pedals 143 initiiert, sodass das zweite Steuergerät 110 beispielsweise eine Bremseinrichtung 144 als Aktor ansteuert.

Da die erste Haupteinheit 125 und die erste Redundanzeinheit 130 im ersten Steuergerät 105 angeordnet sind, sind sie gemäß diesem Ausführungsbeispiel galvanisch voneinander getrennt, um beispielsweise Interferenzen zu vermeiden. Auch die zweite Haupteinheit 135 und die zweite Redundanzeinheit 140 sind gemäß diesem Ausführungsbeispiel aus demselben Grund voneinander galvanisch getrennt. Gemäß diesem Ausführungsbeispiel ist das erste Bordnetz 115 ausgebildet, um die erste Haupteinheit 125 des ersten Steuergeräts 105 und die zweite Redundanzeinheit 140 des zweiten Steuergeräts 110 zu versorgen und gemäß diesem Ausführungsbeispiel ebenfalls mit Energie zu versorgen. Das bedeutet, dass das erste Bordnetz 115 dem entsprechend dafür eine erste Energiequelle 145 aufweist. Das zweite Bordnetz 120 ist gemäß diesem Ausführungsbeispiel von dem ersten Bordnetz 115 getrennt und verbindet die zweite Haupteinheit 135 des zweiten Steuergeräts 110 mit der ersten Redundanzeinheit 130 des ersten Steuergeräts 105, sodass sie zwei voneinander getrennte Schaltkreise bilden. Ferner weist das zweite Bordnetz 120 eine zweite Energiequelle 150 auf, die ausgebildet ist, um die zweite Haupteinheit 135 und die erste Redundanzeinheit 130 mit Energie zu versorgen. Das bedeutet mit anderen Worten, dass beispielsweise für eine hinreichende Unabhängigkeit der beiden Teilsysteme der Fahrzeugfunktionen das primäre Teilsystem, das bedeutet die erste Haupteinheit 125, bzw. die zweite Haupteinheit 135 und das redundante Teilsystem, das bedeutet die erste Redundanzeinheit 130 und die zweite Redundanzeinheit 140, von jeweils einem der Bordnetze 115, 120 versorgt und galvanisch voneinander getrennt sind. Folglich sind die Bordnetze 115, 120 gemäß diesem Ausführungsbeispiel voneinander unabhängig, können aber einen gemeinsamen Massepol aufweisen. In diesem Ausführungsbeispiel sind die Bordnetze 115, 120 unabhängig, da von einer galvanischen Trennung ausgegangen wird. Sinnvollerweise erfolgt diese galvanische Trennung nicht nur in den beiden Steuergeräten sondern auch auf Systemebene, sodass die Energiequellen keinerlei elektrische Verbindung zueinander haben. Als Abwandlungen sind auch Ausführungsbeispiele mit gemeinsamer Masse oder nur einer Batterie denkbar. In diesem Fall sollte jedoch nicht mehr von einer strikten galvanischen Trennung gesprochen werden.

Mit anderen Worten wird ein Konzept für ein effizientes System zur fehlertoleranten Quer- und Längsführung von hochautomatisierten Fahrzeugen vorgestellt. Um dies zu erreichen, stellt das jeweils andere Steuergerät, das bedeutet das erste Steuergerät 105 für das zweite Steuergerät 110 und das zweite Steuergerät 110 für das erste Steuergerät 105, eine Rückfallebene des Einen dar. Demnach ist jedem der beiden Steuergeräte 105, 110 eine Hauptfunktion und eine Backupfunktion zugeordnet. Um mittels Redundanzeinheit 130, 140 eine Backupfunktionalität zu ermöglichen, sind im ersten Steuergerät 105 und im zweiten Steuergerät 110 weitere Schaltungskomponenten vorgesehen, wie beispielsweise zusätzliche Endstufen, die gemäß diesem Ausführungsbeispiel für die jeweilige Redundanzeinheit 130, 140 angeordnet sind. Die entsprechenden Schaltungskomponenten können beispielsweise einer Spannungsaufbereitung dienen, als Mikrocontroller oder CAN (Controller Area Network) ausgeformt und lediglich einmal pro Steuergerät 105, 110 integriert sein. Gemäß diesem Ausführungsbeispiel sind die Redundanzeinheiten 130, 140 demnach ausgebildet, um als Backup zu fungieren. Gemäß einem optionalen Ausführungsbeispiel wird eine Komfortfunktion des Fahrzeugs, wie beispielsweise eine Sitzheizung oder als Beispiel für Komfortfunktion eines Bremssteuergeräts eine Belagverschleißregelung deaktiviert, um bei einem Ausfall beispielsweise eines der Steuergeräte 105, 110 eine sicherheitsrelevante Fahrzeugfunktion weiterhin ausführen zu können. Optional können beispielsweise die Endstufen des redundanten Teilsystems der Lenkung, bzw. der ersten Redundanzeinheit 130, auch im zweiten Steuergerät 135, das beispielsweise eine Bremsfunktion steuert, untergebracht sein. Um durch hohe Ströme entstehende EMV-Belastung (EMV = Elektromagnetische Verträglichkeit) oder gewichtstechnisch suboptimalen Auslegung eines Kabelbaums zu vermeiden, sind gemäß diesem Ausführungsbeispiel stromtragende Leitungen innerhalb eines maximalen Abstands zu den Energiequellen 115, 120 und/oder einem entsprechenden Aktor und dem jeweiligen Steuergerät 105, 110 angeordnet.

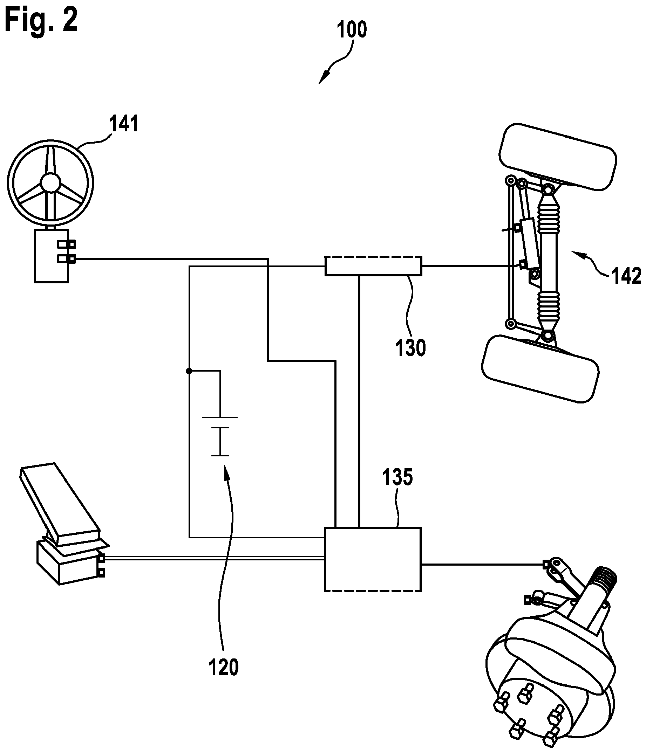

**Fig. 2** zeigt eine schematische Darstellung einer Einrichtung 100 nach Ausfallen eines ersten Bordnetzes oder des ersten Bordnetzes und des ersten Steuergeräts eines Fahrzeugs gemäß einem Ausführungsbeispiel. Angemerkt werden kann in diesem Zusammenhang, dass unter einem Ausfallen eines Bordnetzes oder eines Steuergeräts vorliegend sowohl ein Ausfall einer Hardware-Komponente als auch ein Ausfall/Absturz einer Software-Komponente einer Steuerungssoftware einer betreffenden Einheit verstanden werden kann. Dabei kann es sich um ein Ausführungsbeispiel der anhand von Fig. 1 beschriebenen Einrichtung handeln. Zum Verdeutlichen des in Fig. 1 vorgestellten Ansatzes und zum Verdeutlichen einer Ausfallsituation, in der das erste Bordnetz ausgefallen ist, ist die Einrichtung 100 lediglich mit dem zweiten Bordnetz 120 abgebildet, das auch gemäß diesem Ausführungsbeispiel mit der zweiten Haupteinheit 135 und der ersten Redundanzeinheit 130 verbunden ist. Gemäß diesem Ausführungsbeispiel kann neben der zweiten Fahrzeugfunktion dennoch die erste Fahrzeugfunktion angesteuert werden, da die zweite Haupteinheit 130 mit dem Lenkrad 141 und der ersten Redundanzeinheit 130 verbunden ist. Die erste Redundanzeinheit 130 ist weiterhin mit dem Aktor zur Verstellung der Fahrspur der Radachse 142 verbunden, sodass die zweite Haupteinheit 135 die erste Fahrzeugfunktion weiterhin ansteuern und die Sicherheit des Fahrers, bzw. auch von weiteren Fahrzeuginsassen sichergestellt werden kann.

Mit anderen Worten ist gemäß diesem Ausführungsbeispiel das erste Bordnetz ausgefallen, ein Mikrocontroller ist ausgefallen oder ein beliebiger anderer kritischer Fehler ist im ersten Steuergerät aufgetreten, sodass das zweite Steuergerät, bzw. die zweite Haupteinheit 135 die erste Redundanzeinheit 130 und somit die erste Fahrzeugfunktion ansteuert. Kurzum zeigt Fig. 2 eine fehlertolerante Lenkfunktionalität bei einem Wegfall des ersten Bordnetzes oder einem Ausfall des Mikrocontrollers im ersten Steuergerät, das auch als Lenksteuergerät bezeichnet wird.

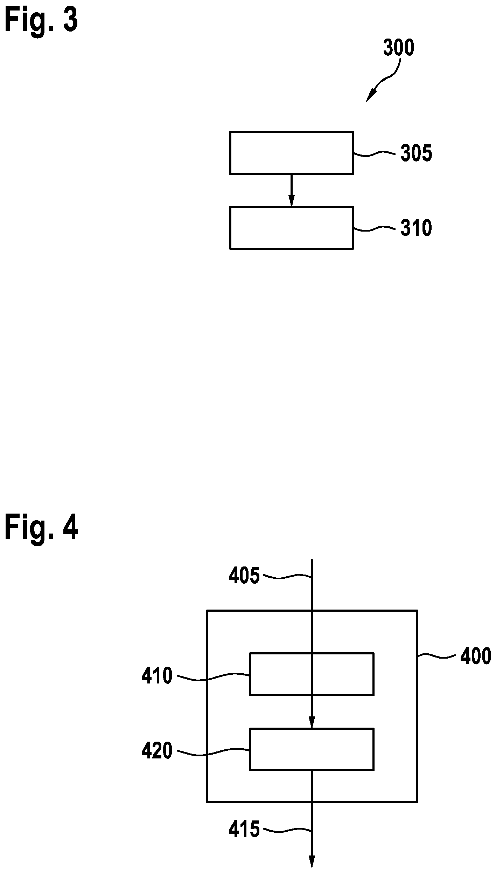

**Fig. 3** zeigt ein Ablaufdiagramm eines Verfahrens 300 zum Ausführen zumindest einer Fahrzeugfunktion für ein Fahrzeug gemäß einem Ausführungsbeispiel. Dabei kann das Verfahren 300 gemäß diesem Ausführungsbeispiel von einer anhand von Fig. 1 beschriebenen Einrichtung für ein Fahrzeug ausgeführt werden. Das Verfahren 300 umfasst dabei gemäß diesem Ausführungsbeispiel einen Schritt 305 des Erkennens und einen Schritt 310 des Ansteuerns. Im Schritt 305 des Erkennens wird ein Ausfallen des ersten Bordnetzes oder des zweiten Bordnetzes erkannt. Im Schritt 310 des Ansteuerns wird die zweite Haupteinheit und die erste Redundanzeinheit angesteuert, wenn das erste Bordnetz ausgefallen ist. Weiterhin wird zusätzlich oder alternativ im Schritt 310 des Ansteuerns die erste Haupteinheit und die zweite Redundanzeinheit angesteuert, wenn das zweite Bordnetz ausgefallen ist. Dadurch wird die erste Fahrzeugfunktion und/oder die zweite Fahrzeugfunktion ausgeführt.

**Fig. 4** zeigt ein Blockschaltbild eines Steuergeräts 400 zum Ansteuern eines Verfahrens zum Ausführen zumindest einer Fahrzeugfunktion für ein Fahrzeug gemäß einem nicht beanspruchten Beispiel. Dabei kann es sich um ein Steuergerät 400 handeln, das ausgebildet ist, um das in Fig. 3 beschriebene Verfahren zu steuern. Gemäß diesem Ausführungsbeispiel wird beispielsweise ein Erkennungssignal 405, das den erkannten Ausfall repräsentiert von einer Einleseeinheit 410 eingelesen. Anschließend wird gemäß diesem Ausführungsbeispiel ein Ansteuersignal 415, das einen Ansteuerungsbefehl der Fahrzeugfunktionen repräsentiert, von einer Ausgabeeinheit 420 unter Verwendung des Erkennungssignals 405 ausgegeben.

Die hier vorgestellten Verfahrensschritte können wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### BEZUGSZEICHENLISTE

- 100: Einrichtung
- 105: Erstes Steuergerät
- 110: Zweites Steuergerät
- 115: Erstes Bordnetz
- 120: Zweites Bordnetz
- 125: Erste Haupteinheit
- 130: Erste Redundanzeinheit
- 135: Zweite Haupteinheit
- 140: Zweite Redundanzeinheit
- 141: Lenkrad
- 142: Radachse
- 143: Pedal
- 144: Bremseinrichtung
- 145: Erste Energiequelle
- 150: Zweite Energiequelle

- 300: Verfahren
- 305: Schritt des Erkennens
- 310: Schritt des Ansteuerns

- 400: Steuergerät
- 405: Erkennungssignal
- 410: Einleseeinheit
- 415: Ansteuersignal
- 420: Ausgabeeinheit

## Patentansprüche

1. Einrichtung (100) zum Ausführen zumindest einer Fahrzeugfunktion für ein Fahrzeug, wobei die Einrichtung (100) die folgenden Merkmale aufweist:
- ein erstes Steuergerät (105), das eine erste Haupteinheit (125) und eine erste Redundanzeinheit (130) aufweist, wobei das erste Steuergerät (105) ausgebildet ist, um eine erste Fahrzeugfunktion anzusteuern;
- ein zweites Steuergerät (110), das eine zweite Haupteinheit (135) und eine zweite Redundanzeinheit (140) aufweist, wobei das zweite Steuergerät (110) ausgebildet ist, um eine zweite Fahrzeugfunktion anzusteuern; und
- ein erstes Bordnetz (115), das ausgeformt ist, um die erste Haupteinheit (125) mit der zweiten Redundanzeinheit (140) zu verbinden und ein von dem ersten Bordnetz (115) getrenntes zweites Bordnetz (120), das ausgeformt ist, um die zweite Haupteinheit (135) mit der ersten Redundanzeinheit (130) zu verbinden, wobei die zweite Haupteinheit (135) ausgebildet ist, um die erste Redundanzeinheit (130) anzusteuern, wenn das erste Bordnetz (115) ausfällt und wobei die erste Haupteinheit (125) ausgebildet ist, um die zweite Redundanzeinheit (140) anzusteuern, wenn das zweite Bordnetz (120) ausfällt.

2. Einrichtung (100) gemäß Anspruch 1, wobei die erste Haupteinheit (125) und die erste Redundanzeinheit (130), insbesondere galvanisch, voneinander getrennt sind, und/oder wobei die zweite Haupteinheit (135) und die zweite Redundanzeinheit (140) galvanisch voneinander getrennt sind.

3. Einrichtung (100) gemäß einem der vorangegangenen Ansprüche, wobei das erste Bordnetz (115) eine erste Energiequelle (145) aufweist und wobei das zweite Bordnetz (120) eine zweite Energiequelle (150) aufweist, wobei die erste Energiequelle (145) und/oder ein erster Aktor zur Ausführung der ersten Fahrzeugfunktion innerhalb eines ersten maximalen Abstands der ersten Haupteinheit (125) und der ersten Redundanzeinheit (130) angeordnet ist, und wobei die zweite Energiequelle (120) und/oder ein zweiter Aktor zur Ausführung der zweiten Fahrzeugfunktion innerhalb eines zweiten maximalen Abstands der zweiten Haupteinheit (135) und der zweiten Redundanzeinheit (140) angeordnet ist.

4. Einrichtung (100) gemäß einem der vorangegangenen Ansprüche, wobei das erste Bordnetz (115) ausgebildet ist, um die erste Haupteinheit (125) und die zweite Redundanzeinheit (140) mit Energie zu speisen, und wobei das zweite Bordnetz (120) ausgebildet ist, um die zweite Haupteinheit (135) und die erste Redundanzeinheit (130) mit Energie zu speisen.

5. Einrichtung (100) gemäß einem der vorangegangenen Ansprüche, wobei das erste Steuergerät (105) und/oder das zweite Steuergerät (110) ausgebildet ist, um zumindest eine Komfortfunktion des Fahrzeugs zu deaktivieren, wenn die erste Fahrzeugfunktion und/oder die zweite Fahrzeugfunktion ausfällt.

6. Einrichtung (100) gemäß einem der vorangegangenen Ansprüche, wobei das erste Steuergerät (105) und/oder das zweite Steuergerät (110) ausgebildet ist, um eine von der ersten Fahrzeugfunktion unabhängige zweite Fahrzeugfunktion anzusteuern.

7. Einrichtung (100) gemäß einem der vorangegangenen Ansprüche, wobei das erste Steuergerät (105) ausgebildet ist, um als erste Fahrzeugfunktion eine Bewegungsfunktion, insbesondere eine Lenkaktion des Fahrzeugs anzusteuern und/oder wobei das zweite Steuergerät (110) ausgebildet ist, um als zweite Fahrzeugfunktion eine geschwindigkeits- und/oder richtungsändernde Aktion, insbesondere eine Bremsaktion des Fahrzeugs anzusteuern.

8. Verfahren (300) zum Ausführen zumindest einer Fahrzeugfunktion für ein Fahrzeug unter Verwendung der Einrichtung (100) gemäß einem der vorangegangenen Ansprüche, wobei das Verfahren (300) die folgenden Schritte umfasst:
- Erkennen (305) eines Ausfallens und/oder Defekts des ersten Bordnetzes (115) oder des zweiten Bordnetzes (120);
- Ansteuern (310) der zweiten Haupteinheit (135) und der ersten Redundanzeinheit (130), wenn das erste Bordnetz (115) ausgefallen ist und Ansteuern der ersten Haupteinheit (125) und der zweiten Redundanzeinheit (140), wenn das zweite Bordnetz (120) ausgefallen ist, um die erste Fahrzeugfunktion und/oder die zweite Fahrzeugfunktion auszuführen.

9. 44-Computerprogramm, das dazu eingerichtet ist, das Verfahren (300) gemäß Anspruch 8 unter Verwendung der Einrichtung (100) gemäß einem der Ansprüche 1 bis 7 auszuführen.

10. 44r Maschinenlesbares Speichermedium, auf dem das Computerprogramm nach Anspruch 9 gespeichert ist.

## Claims

1. An apparatus (100) for carrying out at least one vehicle function for a vehicle, the device (100) having the following characteristics:
- a first control unit (105) having a first main unit (125) and a first redundant unit (130), wherein the first control unit (105) is designed to control a first vehicle function;
- a second control unit (110) having a second main unit (135) and a second redundant unit (140), wherein the second control unit (110) is designed to control a second vehicle function; and
- a first electrical system (115), which is designed to connect the first main unit (125) to the second redundant unit (140) and a second electrical system (120) separated from the first electrical system (115) which is designed to connect the second main unit (135) to the first redundant unit (130), wherein the second main unit (135) is designed to control the first redundant unit (130) if the first electrical system (115) fails and wherein the first main unit (125) is designed to control the second redundant unit (140) if the second electrical system (120) fails.

2. The apparatus (100) as claimed in claim 1, wherein the first main unit (125) and the first redundant unit (130) are isolated from each other, in particular galvanically, and/or wherein the second main unit (135) and the second redundant unit (140) are galvanically isolated from each other.

3. The apparatus (100) as claimed in any one of the previous claims, wherein the first electrical system (115) has a first energy source (145) and wherein the second electrical system (120) has a second energy source (150), wherein the first energy source (145) and/or a first actuator for carrying out the first vehicle function is/are arranged within a first maximum distance of the first main unit (125) and the first redundant unit (130), and wherein the second energy source (120) and/or a second actuator for carrying out the second vehicle function is/are arranged within a second maximum distance of the second main unit (135) and the second redundant unit (140).

4. The apparatus (100) as claimed in any one of the previous claims, wherein the first electrical system (115) is designed to feed the first main unit (125) and the second redundant unit (140) with energy, and wherein the second electrical system (120) is designed to feed the second main unit (135) and the first redundant unit (130) with energy.

5. The apparatus (100) as claimed in any one of the previous claims, wherein the first control unit (105) and/or the second control unit (110) is/are designed to deactivate at least one comfort function of the vehicle if the first vehicle function and/or the second vehicle function fails.

6. The apparatus (100) as claimed in any one of the previous claims, wherein the first control unit (105) and/or the second control unit (110) is/are designed to control a second vehicle function which is independent of the first vehicle function.

7. The apparatus (100) as claimed in any one of the previous claims, wherein the first control unit (105) is designed to control a motion function as the first vehicle function, in particular a steering action of the vehicle, and/or wherein the second control unit (110) is designed to control a speed-changing and/or direction-changing action as a second vehicle function, in particular a braking action of the vehicle.

8. A method (300) for carrying out at least one vehicle function for a vehicle using the apparatus (100) as claimed in one any of the previous claims, wherein the method (300) comprises the following steps:
- detecting (305) a failure and/or defect of the first electrical system (115) or the second electrical system (120);
- controlling (310) the second main unit (135) and the first redundant unit (130) if the first electrical system (115) has failed and controlling the first main unit (125) and the second redundant unit (140) if the second electrical system (120) has failed, in order to perform the first vehicle function and/or the second vehicle function.

9. A computer program which is set up to carry out the method (300) as claimed in claim 8 using the apparatus (100) according to any one of claims 1 to 7.

10. A machine-readable memory medium on which the computer program as claimed in claim 9 is stored.

## Revendications

1. Appareil (100) pour exécuter au moins une fonction de véhicule pour un véhicule, dans lequel l'appareil (100) présente les caractéristiques suivantes :
- un premier dispositif de commande (105) qui présente une première unité principale (125) et une première unité de redondance (130), dans lequel le premier dispositif de commande (105) est conçu pour commander une première fonction de véhicule ;
- un second dispositif de commande (110) qui présente une seconde unité principale (135) et une seconde unité de redondance (140), dans lequel le second dispositif de commande (110) est conçu pour commander une seconde fonction de véhicule ; et
- un premier réseau de bord (115) qui est formé pour connecter la première unité principale (125) à la seconde unité de redondance (140) et un second réseau de bord (120) séparé du premier réseau de bord (115) qui est formé pour connecter la seconde unité principale (135) à la première unité de redondance (130), dans lequel la seconde unité principale (135) est conçue pour commander la première unité de redondance (130) lorsque le premier réseau de bord (115) tombe en panne et dans lequel la première unité principale (125) est conçue pour commander la seconde unité de redondance (140) lorsque le second réseau de bord (120) tombe en panne.

2. Appareil (100) selon la revendication 1, dans lequel la première unité principale (125) et la première unité de redondance (130) sont séparées l'une de l'autre, en particulier galvaniquement, et/ou dans lequel la seconde unité principale (135) et la seconde unité de redondance (140) sont séparées galvaniquement l'une de l'autre.

3. Appareil (100) selon l'une quelconque des revendications précédentes, dans lequel le premier réseau de bord (115) présente une première source d'énergie (145) et dans lequel le second réseau de bord (120) présente une seconde source d'énergie (150), dans lequel la première source d'énergie (145) et/ou un premier actionneur pour l'exécution de la première fonction de véhicule sont disposés à l'intérieur d'une première distance maximale de la première unité principale (125) et de la première unité de redondance (130), et dans lequel la seconde source d'énergie (120) et/ou un second actionneur pour l'exécution de la seconde fonction de véhicule est disposé à l'intérieur d'une seconde distance maximale de la seconde unité principale (135) et de la seconde unité de redondance (140).

4. Appareil (100) selon l'une quelconque des revendications précédentes, dans lequel le premier réseau de bord (115) est conçu pour alimenter en énergie la première unité principale (125) et la seconde unité de redondance (140), et dans lequel le second réseau de bord (120) est conçu pour alimenter en énergie la seconde unité principale (135) et la première unité de redondance (130).

5. Appareil (100) selon l'une quelconque des revendications précédentes, dans lequel le premier dispositif de commande (105) et/ou le second dispositif de commande (110) est conçu pour désactiver au moins une fonction de confort du véhicule lorsque la première fonction de véhicule et/ou la seconde fonction de véhicule tombe en panne.

6. Appareil (100) selon l'une quelconque des revendications précédentes, dans lequel le premier dispositif de commande (105) et/ou le second dispositif de commande (110) est conçu pour commander une seconde fonction de véhicule indépendante de la première fonction de véhicule.

7. Appareil (100) selon l'une quelconque des revendications précédentes, dans lequel le premier dispositif de commande (105) est conçu pour commander, en tant que première fonction de véhicule, une fonction de déplacement, en particulier une action de direction du véhicule et/ou dans lequel le second dispositif de commande (110) est conçu pour commander, en tant que seconde fonction de véhicule, une action changeant la vitesse et/ou changeant la direction, en particulier une action de freinage du véhicule.

8. Procédé (300) pour exécuter au moins une fonction de véhicule pour un véhicule en utilisant l'appareil (100) selon l'une quelconque des revendications précédentes, dans lequel le procédé (300) comprend les étapes suivantes :
- détection (305) d'une panne et/ou d'un défaut du premier réseau de bord (115) ou du second réseau de bord (120) ;
- commande (310) de la seconde unité principale (135) et de la première unité de redondance (130) lorsque le premier réseau de bord (115) est tombé en panne et commande de la première unité principale (125) et de la seconde unité de redondance (140) lorsque le second réseau de bord (120) est tombé en panne pour exécuter la première fonction de véhicule et/ou la seconde fonction de véhicule.

9. Programme informatique qui est configuré pour exécuter le procédé (300) selon la revendication 8 en utilisant l'appareil (100) selon l'une quelconque des revendications 1 à 7.

10. Support de stockage lisible par machine sur lequel le programme informatique selon la revendication 9 est stocké.
